Europäisches Patentamt

European Patent Office

Office européen des brevets

(11) Veröffentlichungsnummer: **0 487 567 B1**

(12) **EUROPÄISCHE PATENTSCHRIFT**

(45) Veröffentlichungstag der Patentschrift: **01.06.94**

(51) Int. Cl.5: **C01B  15/12**

(21) Anmeldenummer: **90912019.8**

(22) Anmeldetag: **10.08.90**

(86) Internationale Anmeldenummer:
**PCT/EP90/01320**

(87) Internationale Veröffentlichungsnummer:
**WO 91/02696 (07.03.91 91/06)**

(54) **VERFAHREN ZUR GRANULIERUNG VON PERBORATMONOHYDRAT.**

(30) Priorität: **19.08.89 DE 3927398**
**09.11.89 DE 3937251**

(43) Veröffentlichungstag der Anmeldung:
**03.06.92 Patentblatt  92/23**

(45) Bekanntmachung des Hinweises auf die
Patenterteilung:
**01.06.94 Patentblatt  94/22**

(84) Benannte Vertragsstaaten:
**AT BE CH DE ES FR GB IT LI NL**

(56) Entgegenhaltungen:
**AU-B- 551 495**

**Patent Abstracts of Japan,vol. 9, no. 260
(C-309)(1983) 17 Oct. 1985, & JP-A-60 112714
(NISSAN KAGAKU KOGYO K. K.) 19 June
1985, see the whole document**

(73) Patentinhaber: **Henkel Kommanditgesellschaft
auf Aktien**

**D-40191 Düsseldorf(DE)**

(72) Erfinder: **BAUER, Volker
Ziegeleiweg 34
D-4000 Düsseldorf(DE)**
Erfinder: **RÄHSE, Wilfried
Bahlenstrasse 168
D-4000 Düsseldorf 13(DE)**
Erfinder: **KÖSTER, Klaus
Hatzfeldstrasse 185a
D-5600 Wuppertal 2(DE)**
Erfinder: **JACOBS, Jochen
Teschensudberg 50
D-5600 Wuppertal 12(DE)**

**Beschreibung**

Die Erfindung liegt auf dem Gebiet der Herstellung anorganischer Peroxoverbindungen.

Anorganische Peroxoverbindungen, insbesondere Perborate, finden seit langer Zeit Verwendung als Oxidationsmittel in Bleich-, Wasch- und Desinfektionsmitteln. Während auf dem Gebiet der Wasch- und Bleichmittel bisher überwiegend Perborattetrahydrat eingesetzt wurde, gewinnt in neuerer Zeit auch das Monohydrat steigende Bedeutung wegen seines höheren Aktivsauerstoffgehaltes und seiner höheren Lösegeschwindigkeit. Nach heutigem Wissen handelt es sich bei diesen Verbindungen in Wirklichkeit um das Hexahydrat bzw. die wasserfreie Form des zyklischen Natriumdiperoxodiborats, doch sollen im folgenden die alten Bezeichnungen Perborattetrahydrat ($NaBO_3 \cdot 4H_2O$) und Natriumperboratmonohydrat ($NaBO_3 \cdot H_2O$) verwendet werden. Auch die in der Technik übliche Kennzeichnung über den Aktivsauerstoffgehalt, nach der Produkte mit mehr als 15 % AO als Monohydrat bezeichnet werden, soll im folgenden beibehalten werden (theoretischer Aktivsauerstoffgehalt des Monohydrats: 16,0 Gew.-%).

Perborattetrahydrat fällt bei der technischen Herstellung aus Natriumborat und Wasserstoffperoxid im allgemeinen als grobkristallines, abriebfestes Pulver mit verhältnismäßig hohem Schüttgewicht an. Es läßt sich daher gut in die üblichen Waschmittel einmischen. Perboratmonohydrat dagegen, das üblicherweise durch Trocknung aus dem Perborattetrahydrat hergestellt wird, ist ein leichtes, poröses und wenig abriebstabiles Material, das in dieser Form nur schlecht eingearbeitet werden kann. Es hat daher nicht an Versuchen gefehlt, diese Nachteile des Monohydrats zu beseitigen. Eine Möglichkeit dazu bietet sich in der Granulierung des Perboratmonohydrats. So ist in DE 26 50 225 vergeschlagen worden, Wasserstoffperoxid und Borat unter gleichzeitiger Trocknung in der Wirbelschicht zu Perboratmonohydrat zu vereinigen, das bei geeigneter Führung des Verfahrens in Granulatform anfällt. Die zuverlässige Einstellung der Verfahrensparameter ist jedoch schwierig. Daneben sind Verfahren bekannt, bei denen zunächst das Tetrahydrat mit Wasser und/oder anderen Granulierhilfsmitteln zu größeren Teilchen agglomeriert wird, die dann in einem nachgeschalteten Trockenschritt zu Perboratmonohydratgranulaten entwässert werden (EP 202 519, EP 295 950, EP 296 813 sowie die ältere Patentanmeldung DE-P 38 30 545.3 ). Allen diesen Verfahren ist gemeinsam, daß auch das granulierte Monohydrat in einer verhältnismäßig leichten Form, d. h. mit niedrigem Schüttgewicht, anfällt. Diese Formen des Monohydrats sind daher in modernen Waschmitteln, die sehr hohe Schüttgewichte aufweisen, nur bedingt einsetzbar, da Entmischung auftreten kann. Daneben ist in der EP 102 419 vorgeschlagen worden, Perborate, insbesondere das durch Erhitzen des Monohydrats erhältliche Oxoborat, durch Kompaktierung zu granulieren. Dieses Verfahren erfordert jedoch den Zusatz von Polytetrafluorethylen als Gleitmittel und liefert, nicht zuletzt weil dieser Zusatz biologisch nicht abbaubar ist, ein für Wasch- und Bleichmittel ungeeignetes Produkt.

Es bestand daher nach wie vor die Aufgabe, Perboratmonohydrat in einer für den Einsatz in modernen Waschmitteln geeigneten Form bereitzustellen.

Diese Aufgabe wird erfindungsgemäß gelöst durch ein Kompaktierungsverfahren, welches Gegenstand des unabhängigen Anspruchs 1 ist; bevorzugte Ausgestaltungen sind Gegenstand der abhängigen Ansprüche 2 bis 8.

Vorzugsweise wird die Kompaktierung zwischen Walzen vorgenommen.

Während sich Perboratmonohydrat ohne Zusatz nur bedingt kompaktieren läßt, liefert das erfindungsgemäße Verfahren ein Produkt hoher Dichte, das überraschenderweise trotzdem eine ausreichend hohe Lösegeschwindigkeit, die in vielen Fällen der des unbehandelten Monohydrats nicht nachsteht, aufweist. Gleichzeitig sind die erhaltenen Granulate sehr stabil gegen Abrieb. Sie lassen sich daher vorteilhaft in körnigen Wasch- oder Reinigungsmitteln verwenden.

Im einzelnen läuft das erfindungsgemäße Verfahren wie folgt ab: Perboratmonohydrat und das Kompaktierungshilfsmittel werden getrennt mit Hilfe geeigneter Vorrichtungen abgemessen, dann wird das Kompaktierungshilfsmittel dem Perboratmonohydrat zugesetzt und sofern nötig, gründlich mit dem Perboratmonohydrat vermischt. Das Perboratmonohydrat kann in der handelsüblichen, feinen, porösen Form eingesetzt werden; das Kompaktierungsmittel wird vorzugsweise in ebenso feinteiliger bis noch feinerer Form verwendet. Als Mischapparaturen eignen sich beispielsweise Paddelmischer wie Lödige- und Draismischer oder Intensivmischer wie Eirich- und MTI-Mischer. Das Gemisch aus beiden Stoffen wird dann, gegebenenfalls nach Zwischenlagerung, dem Kompaktierungsaggregat zugeführt. Prinzipiell eignen sich zur Kompaktierung Tablettenpressen, extrudergetriebene Strangpressen, Pelletisierapparaturen und ähnliche Geräte. Bevorzugt wird allerdings die Kompaktierung zwischen sich drehenden Walzen, die einerseits technisch besonders einfach durchführbar ist und bei der zum anderen die Vorzüge des erfindungsgemäßen Verfahrens besonders deutlich hervortreten. Bevorzugt wird weiterhin die Kompaktierung zwischen glatten Walzen, doch ist auch die Verwendung von Walzen mit Oberflächenstrukturen möglich.

2

Vorzugsweise wird bei Liniendrucken zwischen etwa $1,7 \cdot 10^3$ und etwa $5 \cdot 10^4$ N/cm gearbeitet. Die Walzen werden üblicherweise mit Hilfe von durchströmenden Flüssigkeiten temperiert, wobei Betriebstemperaturen zwischen etwa 20 und etwa 60 °C bevorzugt werden. Nach dem Verlassen des Kompaktieraggregates werden die Kompaktate, sofern nötig, mit Hilfe geeigneter Vorrichtungen wie Messerwerke oder Mühlen auf das gewünschte Maß zerkleinert. Für den Einsatz in Waschmitteln sind Korngrößen zwischen etwa 0,3 und etwa 2 mm günstig, doch können mühelos auch andere Korngrößen mit dem erfindungsgemäßen Verfahren erzeugt werden. An den Zerkleinerungsschritt kann sich als weitere Maßnahme die Abrundung der entstandenen Körner in geeigneten Geräten, z. B. einem Marumizer oder einer Kugelmühle anschließen. Unabhängig davon werden, sofern erforderlich, die unerwünschten Fein- und Grobkornanteile, im allgemeinen durch Sieben, abgetrennt, so daß ein für den gewünschten Anwendungszweck optimales Kornspektrum verbleibt. Die abgetrennten Anteile können in den Produktionsprozeß zurückgeführt werden. Selbstverständlich kann das erfindungsgemäße Verfahren sowohl diskontinuierlich als auch in Teilen oder insgesamt kontinuierlich durchgeführt werden.

Bei den als Zuschlagsstoffen verwendeten Alkali- oder Erdalkalisalzen kann es sich um lösliche oder auch unlösliche Salze handeln. Für die Herstellung schnellöslicher Granulate ist es zweckmäßig, gut lösliche Alkali- oder Erdalkalisalze zu verwenden. Geeignet sind sowohl wasserfreie Salze als auch trockene Hydrate. Hygroskopische Salze sind in der Mehrzahl der Fälle nicht geeignet, da sie in feuchter Atmosphäre zum Verkleben der Granulatteilchen führen können. Weiterhin ist bei der Auswahl der Salze darauf zu achten, daß die Anionen mit Perboratmonohydrat verträglich sind. Salze mit leicht oxidierbaren Anionen scheiden daher ebenso aus wie stark sauer reagierende Salze. Beispiele für geeignete lösliche anorganische Salze sind Natriumcarbonat und seine Hydrate, Natriumsulfat und seine Hydrate, Natriumbicarbonat, Natriumsesquicarbonat, Kaliumcarbonat, Kaliumsulfat, Magnesiumsulfat und seine Hydrate und Natriumsilikat. Beispiele für geeignete unlösliche anorganische Salze sind Magnesiumsilikat und Natriumaluminiumsilikat (z. B. Zeolith NaA). Beispiele für geeignete organische Salze sind Natriumacetat, Magnesiumacetat, Natriumcitrat, Magnesiumcitrat und Magnesiumlactat. Bevorzugt werden von diesen Salzen Natriumperborattetrahydrat, Natriumsulfat, Natriumcitrat, Natriumlactat und Natriumaluminiumsilikat, insbesondere aber Natriumcarbonat und Natriumcarbonatdecahydrat.

Als Kompaktierungshilfsmittel eignen sich für das Verfahren ebenfalls Kohlenhydrate. Dabei kann es sich um Mono-, Oligo- oder Polysaccharide handeln, die gegebenenfalls auch durch Veretherung, vorzugsweise mit kurzkettigen Alkoholen (1 bis 3 C-Atome), modifiziert sein können. Beispiele derartiger Kohlenhydrate sind Glucose, Saccharose, Stärke und Carboxymethylcellulose. Vorzugsweise werden Polysaccharide, gegebenenfalls in modifizierter Form, eingesetzt.

Weiterhin eignen sich anionische und nichtionische Tenside ebenfalls als Kompaktierungshilfsmittel. Beispiele derartiger Tenside sind Alkylbenzolsulfonate, Alkylsulfate und Alkylethersulfate, sowie langkettige Alkylglycoside und Additionsprodukte von Ethylenoxid an langkettige Alkohole oder Alkylphenole. Hier ist, wie bei allen anderen organischen Kompaktierungshilfsmittel, die Art und Menge des Kompaktierungshilfsmittels so zu wählen, daß keine leicht brennbaren oder schlagempfindlichen Gemische zustande kommen.

Die Menge an Kompaktierungshilfsmittel kann in weiten Grenzen frei gewählt werden und wird nach oben nur durch die unter Umständen unerwünschte Ballastwirkung des Zusatzes begrenzt. Üblich sind Mengen von etwa 0,2 bis etwa 30 Gew.-%, vorzugsweise 0,5 bis 10 Gew.-% an Kompaktierungshilfsmittel, bezogen auf das Gesamtgewicht der Mischung vor dem Kompaktieren. Die Menge an Kompaktierungshilfsmittel beeinflußt in gewissen Grenzen die Löslichkeit des fertigen Produktes und sein Schüttgewicht. Selbstverständlich ist es möglich, bei dem erfindungsgemäßen Verfahren anstelle einzelner Kompaktierungshilfsmittel auch Gemische mehrerer solcher Mittel zu verwenden.

Üblicherweise werden keine weiteren Zusätze bei dem erfindungsgemäßen Verfahren verwendet, doch kann es unter Umständen zweckmäßig und auch vorteilhaft sein, noch weitere Stoffe bei der Kompaktierung einzuarbeiten, um dadurch beispielsweise das Aussehen, die Löslichkeit und Lagerstabilität der Produkte zu verbessern. Beispiele derartiger Zusätze sind Peroxidstabilisatoren, Farbstoffe, Staubbindemittel, wie Paraffinöl, und übliche Granulationshilfsmittel. Vorzugsweise überschreitet die Menge dieser Zusätze nicht 5 Gew.-%. Selbstverständlich muß auch bei der Auswahl dieser Stoffe darauf geachtet werden, daß sie mit den Bestandteilen des Granulates verträglich sind und den Ablauf des erfindungsgemäßen Verfahrens nicht stören.

Außer als Bleichmittel in Waschmitteln ist das auf die erfindungsgemäßen Weise granulierte Perboratmonohydrat selbstverständlich auch für alle anderen Zwecke brauchbar, für die bisher übliche Perborate eingesetzt wurden. Beispielhaft sei nur die Verwendung als Oxidationsmittel oder der Einsatz in Reinigungsmitteln für harte Oberflächen und in Desinfektionsmitteln genannt.

**Beispiele**

Käufliches Natriumperboratmonohydrat (Qualität 40 mit 15 % AO, Degussa) wurde in Mengen von 8 - 99 kg in einem Lödige-Mischer (Fassungsvermögen 130 l) mit der entsprechenden Menge an Kompaktierungshilfsmittel 5 Minuten lang gemischt. Das Gemisch wurde dann mit Hilfe einer Förderschnecke einer Walzenpresse (Typ VP 50 II/75, Alexanderwerk) zugeführt. Die glatten Walzen dieses Kompaktieraggregates hatten einen Durchmesser von 12 cm und eine Breite von 7 cm; sie wurden mit Wasser temperiert. Die aus der Presse austretenden Schülpen wurden in einem angeschlossenen Siebkorbgranulator auf eine Teilchengröße von unter 1,6 mm (Siebweite) zerkleinert. Zum Abrunden der Kanten wurden die scharfkantigen Bruchstücke anschließend 5 Minuten in einer Laborkugelmühle (Durchmeser 10 cm, Firma Hanau) behandelt. Die Charakterisierung der Produkte erfolgte über die Schüttgewichte und die Lösegeschwindigkeit. Diese letzte Größe wurde durch Einrühren einer Probe von 5 g in 500 ml $H_2O$ von 40 °C unter standardisierten Bedingungen (600 ml-Becherglas, Flügelrührer mit 400 Upm) ermittelt und ist als Zeit (in Minuten) angegeben, die bis zur Klärung der Lösung verging. Im Falle unlöslicher Zusätze wurde die Zeit bis zum Verschwinden der groben Teilchen bestimmt.

Tabelle 1 gibt die Bedingungen des Herstellverfahrens und die Eigenschaften der gewonnenen Granulate wieder. Aus den Daten wird deutlich, daß bereits mit geringen Mengen an Zusätzen eine wirksame Kompaktierung des Perboratmonohydrates möglich ist und hohe Schüttgewichte erreicht werden. Dabei bleibt die Lösegeschwindigkeit stets ausreichend hoch.

## Tabelle 1

| Beispiel | Kompaktierungshilfs-mittel | | Liniendruck der Walzen | Temperatur der Walzen | Schüttgewicht g/l | | Lösezeit |
| | Art | Anteil/ Gew.-% | $10^4$ N/cm | °C | nach Sieben | nach Mahlen | Minuten |
|---|---|---|---|---|---|---|---|
| 1 | $NaBO_3$ x $4H_2O$ | 1 | 1,36 | 30 | 765 | 863 | 1,7 |
| 2 | $NaBO_3$ x $4H_2O$ | 5 | 1,70 | 30 | 712 | 818 | 3,5 |
| 3 | $Na_2SO_4$ | 20 | 1,70 | 30 | 775 | 1012 | 1,5 |
| 4 | Zeolith NaA (Wessalith P, Degussa) | 10 | 1,70 | 30 | 772 | 957 | ca. 3 |
| 5 | $Na_2CO_3$ | 0,5 | 1,36 | 30 | 755 | 900 | 1,5 |
| 6 | $Na_2CO_3$ | 5 | 1,53 | 30 | 810 | 887 | 1,3 |
| 7 | $Na_2CO_3$ | 10 | 1,53 | 30 | 803 | 851 | 2,0 |
| 8 | $Na_2CO_3$ x $10H_2O$ | 0,5 | 1,53 | 30 | 756 | 837 | 1,5 |
| 9 | $Na_2CO_3$ x $10H_2O$ | 1 | 1,70 | 30 | 790 | 886 | 1,5 |
| 10 | $Na_2CO_3$ x $10H_2O$ | 10 | 1,70 | 30 | 845 | 1009 | 1,5 |
| 11 | $CH_3COONa$ | 10 | 1,70 | 50 | 757 | 901 | 4,2 |

| Beispiel | Kompaktierungshilfsmittel Art | Anteil/ Gew.-% | Liniendruck der Walzen $10^4$ N/cm | Temperatur der Walzen °C | Schüttgewicht g/l nach Sieben | nach Mahlen | Lösezeit Minuten |
|---|---|---|---|---|---|---|---|
| 12 | (CH$_3$COO)$_2$Mg | 10 | 1,70 | 30 | 780 | 944 | 3,5 |
| 13 | Na-Citrat | 5 | 1,53 | 20 | 753 | 819 | 1,3 |
| 14 | Mg-Citrat | 5 | 1,53 | 20 | 817 | 882 | 1,7 |
| 15 | Mg-Lactat | 5 | 1,70 | 20 | 770 | 878 | 2,4 |
| 16 | Glucose | 5 | 1,36 | 20 | 776 | 836 |  |
| 17 | CMC | 5 | 1,53 | 20 | 756 | 832 | 2,2 |
| 18 | Maisstärke | 5 | 1,36 | 20 | 770 | 817 | 1,7 |
| Vergleich | - | - | unkompaktiert | 30 | 550 | 560 | 1,5 |

**Patentansprüche**

1. Verfahren zur Granulierung von Natriumperboratmonohydrat, bei dem Perboratmonohydrat ohne Verwendung von polymeren Fluorkohlenwasserstoffen unter Zusatz eines Kompaktierungshilfsmittels aus

EP 0 487 567 B1

der Gruppe Alkalisalze, Erdalkalisalze, Kohlenhydrate, die gegebenenfalls verethert sein können, anionische Tenside und nichtionische Tenside trocken kompaktiert und dann auf das erforderliche Maß zerkleinert wird, wobei nur solche Salze verwendet werden, deren Anionen mit dem Perboratmonohydrat verträglich sind.

2. Verfahren nach Anspruch 1, bei dem die Mischung aus Perboratmonohydrat und Kompaktierungshilfsmittel zwischen Walzen kompaktiert wird.

3. Verfahren nach Anspruch 2, bei dem die bei der Kompaktierung entstehenden Schülpen auf das erforderliche Maß gebrochen und die Stücke dann in geeigneten Geräten abgerundet werden.

4. Verfahren nach einem der Ansprüche 1 bis 3, bei dem als weiterer Schritt die unerwünschten Korngrößen abgesiebt und gegebenenfalls in den Herstellprozeß zurückgeführt werden.

5. Verfahren nach einem der Ansprüche 1 bis 3, bei dem 0,2 bis 30 Gew.-%, vorzugsweise 0,5 bis 10 Gew.-% an Kompaktierungshilfsmittel, bezogen auf Endprodukt, zugesetzt werden.

6. Verfahren nach einem der Ansprüche 1 bis 3, bei dem als Kompaktierungshilfsmittel ein Alkali- und/oder ein Erdalkalisalz verwendet wird.

7. Verfahren nach Anspruch 6, bei dem das Salz ausgewählt ist aus der Gruppe Natriumperborattetrahydrat, Natriumcarbonatdecahydrat, Natriumcarbonat, Natriumsulfat, Natriumcitrat, Natriumlactat und Natriumaluminiumsilikat.

8. Verfahren nach Anspruch 7, bei dem Natriumcarbonat oder Natriumcarbonatdecahydrat als Salz zugesetzt werden.

9. Verwendung von Natriumperboratmonohydrat in einer granulierten Form, wie es nach einem der in den Ansprüchen 1 bis 8 beschriebenen Verfahren erhalten wird, in körnigen Wasch-, Reinigungs- oder Desinfektionsmitteln.

**Claims**

1. A process for granulating sodium perborate monohydrate in which perborate monohydrate is dry-compacted in the absence of polymeric fluorocarbons with addition of a compacting aid from the group consisting of alkali metal salts, alkaline earth metal salts, carbohydrates, which may optionally be etherified, anionic surfactants and nonionic surfactants and is then size-reduced to the required degree, only those salts of which the anions are compatible with the perborate monohydrate being used.

2. A process as claimed in claim 1, in which the mixture of perborate monohydrate and compacting aid is compacted between rollers.

3. A process as claimed in claim 2, in which the compactates formed during compacting are broken up to the required size and the fragments are then rounded off in suitable apparatus.

4. A process as claimed in any of claims 1 to 3, in which the unwanted particle sizes are removed by sieving in another step and are optionally returned to the production process.

5. A process as claimed in any of claims 1 to 3, in which the compacting aid is added in a quantity of 0.2 to 30% by weight and preferably 0.5 to 10% by weight, based on the end product.

6. A process as claimed in any of claims 1 to 3, in which an alkali metal and/or alkaline earth metal salt is used as the compacting aid.

7. A process as claimed in claim 6, in which the salt is selected from the group consisting of sodium perborate tetrahydrate, sodium carbonate decahydrate, sodium carbonate, sodium sulfate, sodium citrate, sodium lactate and sodium aluminium silicate.

7

**8.** A process as claimed in claim 7, in which sodium carbonate or sodium carbonate decahydrate is added as the salt.

**9.** The use of sodium perborate monohydrate in the granulated form in which it is obtained by the process claimed in claims 1 to 8 in granular detergents, cleaning preparations or disinfectants.

**Revendications**

**1.** Procédé de granulation de monohydrate de perborate de sodium, dans lequel on compacte à sec du monohydrate de perborate, sans utiliser de fluorocarbones polymères, en ajoutant un adjuvant de compactage faisant partie du groupe constitué des sels de métaux alcalins, sels de métaux alcalino-terreux, hydrates de carbone, pouvant être éthérifiés le cas échéant, tensioactifs anioniques et non ioniques, que l'on pulvérise ensuite de la manière voulue, en utilisant uniquement des sels dont les anions sont compatibles avec le monohydrate de perborate.

**2.** Procédé selon la revendication 1, dans lequel le mélange de monohydrate de perborate et d'adjuvant de compactage est comprimé entre des cylindres.

**3.** Procédé selon la revendication 2, dans lequel les écailles formées lors du compactage sont broyées de manière voulue et les morceaux arrondis ensuite dans des appareils appropriés.

**4.** Procédé selon l'une des revendications 1 à 3, caractérisé en ce que, comme étape ultérieure, les grosseurs de grain indésirables sont retenues par criblage et, le cas échéant, recyclées dans le processus de fabrication.

**5.** Procédé selon l'une des revendications 1 à 3, caractérisé en ce que l'on ajoute 0,2 à 30 % en poids, de préférence 0,5 à 10 % en poids (par rapport au produit final) d'adjuvant de compactage.

**6.** Procédé selon l'une des revendications 1 à 3, dans lequel on utilise comme adjuvant de compactage un sel de métal alcalin et/ou un sel de métal alcalino-terreux.

**7.** Procédé selon la revendication 6, dans lequel le sel est sélectionné parmi le groupe constitué des tétrahydrate de perborate de sodium, décahydrate de carbonate de sodium, carbonate de sodium, sulfate de sodium, citrate de sodium, lactate de sodium et aluminosilicate de sodium.

**8.** Procédé selon la revendication 7, dans lequel le carbonate ou le décahydrate de carbonate de sodium est additionné comme sel.

**9.** Utilisation de monohydrate de perborate de sodium sous une forme granulée, tel qu'il est obtenu selon l'un des procédés décrits dans les revendications 1 à 8, dans des agents lavants, nettoyants ou désinfectants en grains.